# EUROPEAN PATENT APPLICATION

(11) **EP 4 562 996 A1**
(43) Date of publication of application: **04.06.2025**
(21) Application number: 23905981.9
(22) Date of filing: 20.12.2023
(51) Int. Cl.: A01G 3/08, B27B 17/00, A01G 23/091

(54) **CHAINSAW**

(30) Priority: 21.12.2022 CN 202211650447; 21.12.2022 CN 202211649989; 21.12.2022 CN 202211649993; 21.12.2022 CN 202223433706 U
(71) Applicant: Nanjing Chervon Industry Co., Ltd., Nanjing, Jiangsu 211106 (CN)
(72) Inventor: LI, Yang, Nanjing, Jiangsu 211106 (CN); PAN, Li, Nanjing, Jiangsu 211106 (CN); YAMAOKA, Toshinari, Nanjing, Jiangsu 211106 (CN)
(74) Representative: Sun, Yiming
(86) International application number: PCT/CN2023/140118
(87) International publication number: WO 2024/131819

(57) **Abstract**

Provided is a chainsaw (100). The chainsaw (100) includes a housing (13) formed with or connected to at least a handle (14) for a user to hold; a guide plate (11) configured to support and guide a chain (12), where an end of the guide plate (11) is supported by the housing (13); a power supply device (2) including at least one battery pack (21) detachably connected to the housing (13) to provide electrical energy for the chainsaw (100); and a display device (34) mounted to the housing (13) and configured to display a current state of the chainsaw (100). The display device (34) has a display plane (34a), and the angle β between the display plane (34a) and a bottom plane (105) perpendicular to a guide plate plane (111) is greater than or equal to 25° and less than or equal to 75°.

## Description

This application claims priority to Chinese Patent Application No. 202211650447.4 filed with the China National Intellectual Property Administration (CNIPA) on Dec. 21, 2022, Chinese Patent Application No. 202211649989.X filed with the CNIPA on Dec. 21, 2022, Chinese Patent Application No. 202211649993.6 filed with the CNIPA on Dec. 21, 2022, and Chinese Patent Application No. 202223433706.6 filed with the CNIPA on Dec. 21, 2022, the disclosures of which are incorporated herein by reference in their entireties.

### TECHNICAL FIELD

The present application relates to a power tool, for example, a chainsaw.

### BACKGROUND

In the related art, as a garden power tool, a chainsaw is widely used in households, gardens, and other fields. A display device is usually disposed on a housing of the chainsaw so that a working state of the chainsaw can be acquired by a user in time, thereby improving a human-machine interaction capability and allowing the user to better understand the current working state of the chainsaw. In the case where the user holds the chainsaw for cutting, the display device on the chainsaw is inconvenient for the user to directly observe, resulting in degraded user experience.

This part provides background information related to the present application, and the background information is not necessarily the existing art.

### SUMMARY

An object of the present application is to solve or at least alleviate part or all of the preceding problems. Therefore, an object of the present application is to provide a chainsaw with a display device so that when holding the chainsaw for cutting, a user can clearly and conveniently observe the content displayed on the display device and understand multiple current working states of the chainsaw.

To achieve the preceding object, the present application adopts the technical solutions described below. A chainsaw includes a housing formed with or connected to at least a handle for a user to hold; a guide plate configured to support and guide a chain, where an end of the guide plate is supported by the housing; a power supply device including at least one battery pack detachably connected to the housing to provide electrical energy for the chainsaw; and a display device mounted to the housing and configured to display a current state of the chainsaw. The display device has a display plane, and the angle β between the display plane and a bottom plane perpendicular to a guide plate plane is greater than or equal to 25° and less than or equal to 75°.

In some examples, the angle β between the display plane and the bottom plane perpendicular to the guide plate plane is greater than or equal to 40° and less than or equal to 60°.

In some examples, the distance L3 from a display center P of the display plane to the bottom plane is greater than or equal to 85 mm and less than or equal to 200 mm.

In some examples, a display area of the display plane is greater than or equal to 1000 mm² and less than or equal to 3000 mm².

In some examples, the display device is at least partially disposed above the power supply device in an up and down direction.

In some examples, a projection of the display device on the bottom plane perpendicular to the guide plate plane is at least partially located within a projection of the power supply device on the bottom plane.

In some examples, the display device is at least partially disposed in front of the handle in a front and rear direction.

In some examples, a projection of the display device on a first reference plane perpendicular to the front and rear direction does not overlap a projection of the handle on the first reference plane.

In some examples, the display plane has at least one of a brake state display region, a headlight working state display region, a Bluetooth connection state display region, a low oil volume warning display region, a cutting mode display region, an oil output display region, a cutting load display region, or an over-temperature icon display region.

In some examples, the chainsaw further includes multiple operating elements for the user to operate, where at least part of the multiple operating elements is disposed close to the display device.

In some examples, at least one of the multiple operating elements is operable to adjust an oil output of the chainsaw or a lighting state of the chainsaw.

In some examples, the chainsaw further includes a speed regulator disposed close to the handle, where the speed regulator is disposed within a reachable range of a hand on the handle.

In some examples, maximum output power of the chainsaw is greater than or equal to 2500 W and less than or equal to 5000 W; and an effective cutting length of the chainsaw is greater than or equal to 14 inches and less than or equal to 32 inches.

In some examples, the housing encloses an accommodation space for accommodating a motor; the housing includes a detachable first cover plate; and in the case where the first cover plate is detached, the housing forms a first opening through which the accommodation space is opened downward.

In some examples, the housing forms an accommodation portion for accommodating the power supply device; the accommodation portion forms a groove; the groove has an opening that opens downward; and the groove obliquely extends from a groove bottom rearward and downward to the opening.

A chainsaw includes a housing formed with or connected to a handle for a user to hold; a guide plate configured to support and guide a chain, where an end of the guide plate is supported by the housing; and a power supply device detachably connected to the housing to provide electrical energy for the chainsaw. The chainsaw further includes a display device including at least one battery pack detachably connected to the housing to provide electrical energy for the chainsaw. The display device has a display plane, and a display area of the display plane is greater than or equal to 1000 mm² and less than or equal to 3000 mm².

In some examples, the display area of the display plane is greater than or equal to 1000 mm² and less than or equal to 3000 mm².

In some examples, the display device is disposed above the power supply device, and a projection of the display device on a bottom plane perpendicular to a guide plate plane is at least partially located within a projection of the power supply device on the bottom plane.

In some examples, the display device is disposed in front of the handle, and a projection of the display device on a first reference plane perpendicular to a front and rear direction does not overlap a projection of the handle on the first reference plane.

In some examples, the display device is provided with a brake state display region, a headlight working state display region, a Bluetooth connection state display region, a low oil volume warning display region, a cutting mode display region, an oil output display region, a cutting load display region, and an over-temperature icon display region.

### BRIEF DESCRIPTION OF DRAWINGS

FIG. 1 is a perspective view of a chainsaw according to an example of the present application.
FIG. 2 is an exploded view of a tool body and a power supply device of a chainsaw according to an example of the present application.
FIG. 3 is a perspective view of a chainsaw according to an example of the present application from another angle.
FIG. 4 is a perspective view of a chainsaw according to an example of the present application from another angle.
FIG. 5 is a schematic diagram of a display interface of a display device according to an example of the present application.
FIG. 6 is a perspective view of a chainsaw according to an example of the present application from another angle.
FIG. 7 is a perspective view of a tool body of a chainsaw according to an example of the present application.
FIG. 8 is an exploded view of a housing of a chainsaw according to an example of the present application.
FIG. 9 is an exploded view of a first cover plate and a housing of a chainsaw according to an example of the present application.
FIG. 10 is a structural view of a tool body with a housing removed according to an example of the present application.
FIG. 11 is a structural view of a heat dissipation element according to an example of the present application.
FIG. 12 is a structural view illustrating the installation of a motor according to an example of the present application.
FIG. 13 is a structural view of an oil can and a guide plate according to an example of the present application.
FIG. 14 is a structural view of an oil can, a motor, and a guide plate according to an example of the present application.
FIG. 15 is a structural view of an oil can and an oil pump according to an example of the present application.
FIG. 16 is a structural view of a brake baffle according to an example of the present application.
FIG. 17 is a structural view of a wearable device according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

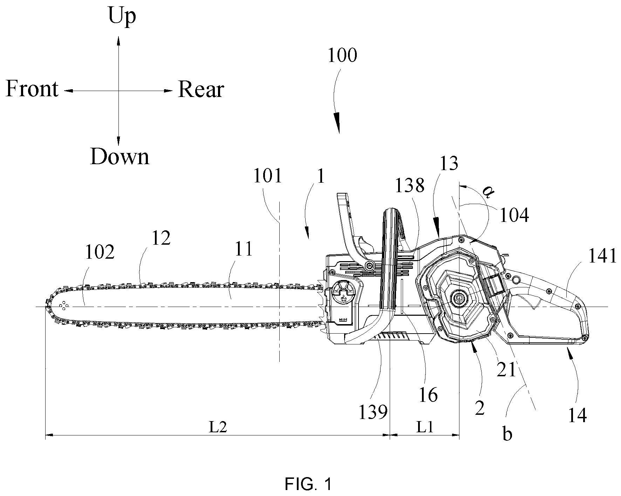

The present application is described below in conjunction with drawings and examples. A garden tool shown in FIG. 1 includes a function element that implements a function of the garden tool. The garden tool is a chainsaw, and the function element of the chainsaw is a chain.

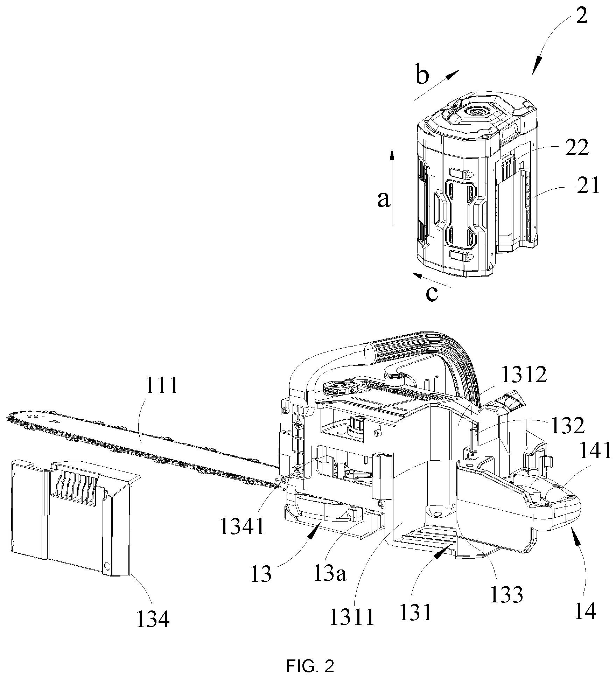

As shown in FIG. 1, to illustrate technical solutions of the present application, an up and down direction and a front and rear direction shown in FIGS. 1 and 2 are defined. As shown in FIGS. 1, 2, and 12, a chainsaw 100 includes a tool body 1 and a power supply device 2. The power supply device 2 is configured to provide the tool body 1 with electrical energy required for working. The tool body 1 includes a guide plate 11, a chain 12, a housing 13, and a motor 36. The guide plate 11 is configured to support and guide the chain 12. An end of the guide plate 11 is supported by the housing 13 and extends out of the housing 13 along a longitudinal direction of the housing 13 to form a guide plate plane 111. The motor 36 is disposed in an accommodation space 13a formed by the housing 13. The power supply device 2 provides electrical energy for at least the motor 36 so that the motor 36 drives the chain 12 to rotate under the guidance of the guide plate 11 to implement a cutting function of the chainsaw 100. In some examples, the power supply device 2 includes at least one battery pack 21, and the at least one battery pack 21 is detachably connected to the housing 13, making it convenient for a user to replace the battery pack 21 to prolong a working duration of the chainsaw 100.

As shown in FIGS. 1 and 2, the housing 13 forms an accommodation portion 131 for accommodating the battery pack 21, and the battery pack 21 is detachably mounted to the accommodation portion 131. In some examples, the accommodation portion 131 forms a groove 1311, and the groove 1311 obliquely extends from a groove bottom 1312 rearward and downward to the opening to an opening 133. The groove bottom 1312 of the groove 1311 is disposed opposite the opening 133. The groove bottom 1312 is disposed above the opening 133, and a sidewall of the groove 1311 is inclined rearward from the groove bottom 1312 to the opening 133. After the battery pack 21 is mounted to the tool body 1, the battery pack 21 is mounted on the tool body 1 in a manner of being inclined from front to back so that the overall length of the chainsaw 100 in the front and rear direction can be reduced, and thus the overall structure of the chainsaw 100 is more compact. The structure of the preceding groove 1311 is used so that an exposed area of the battery pack 21 can be increased, which is conducive to the heat dissipation of the battery pack 21 and can also reduce the weight of the chainsaw 100.

In some examples, the diameter of the opening 133 is smaller than a dimension of the battery pack 21 in the front and rear direction after the battery pack 21 is mounted to the tool body 1 so that the opening 133 supports and limits the battery pack 21, improving the stability of a connection between the battery pack 21 and the tool body 1 without affecting the heat dissipation of the battery pack 21. In this manner, a mounting structure of the battery pack 21 in the present application enables the overall center of gravity of the chainsaw 100 to be adjusted according to a size of the battery pack 21 in the case where the tool body 1 is adapted to different battery packs 21 so that the user holds the chainsaw 100 in conformity with ergonomics and with high comfort.

In some examples, connection terminals 132 are disposed in the accommodation portion 131, the battery pack 21 includes battery connection terminals 22, and the battery connection terminals 22 are adapted to the connection terminals 132. In some examples, the battery connection terminals 22 are pluggably connected to the connection terminals 132. After the battery pack 21 is mounted to the tool body 1, the battery connection terminals 22 are plugged into the connection terminals 132, which are electrically connected with good stability, avoiding poor contact between the battery pack 21 and the tool body 1 due to external factors such as vibration of the chainsaw 100 during use.

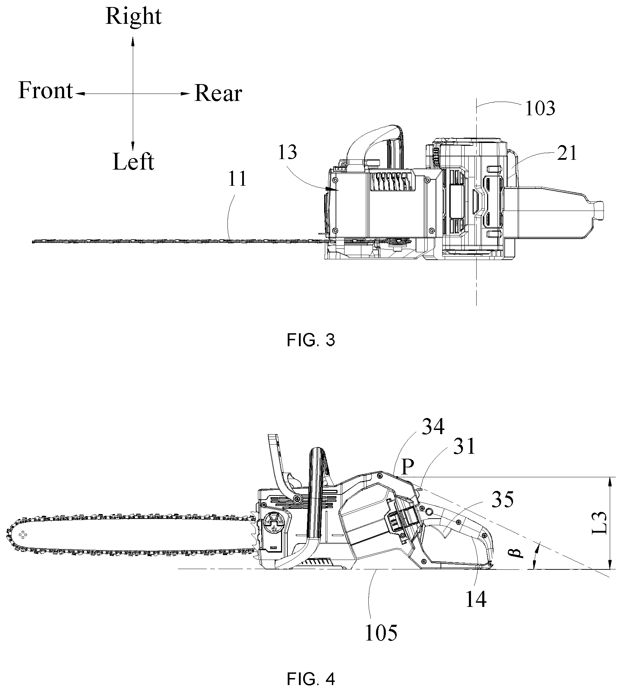

As shown in FIGS. 2 and 3, the battery pack 21 is detachably mounted to the tool body 1 along a direction of a first straight line 103. The first straight line 103 is perpendicular to the guide plate plane 111 of the guide plate 11. In the case where the user operates the chainsaw 100, the battery pack 21 may be detached and mounted from the left or right side of the tool body 1, and the battery pack 21 is actually detached and mounted along a direction in which the battery connection terminals 22 of the battery pack 21 are plugged into the connection terminals 132 of the tool body 1.

In some examples, the accommodation portion 131 penetrates through the housing 13 along the direction of the first straight line 103, thereby increasing the heat dissipation area of the battery pack 21 and reducing the overall weight of the chainsaw 100.

In some examples, an upper end of the battery pack 21 is inclined forward, and the battery connection terminals 22 are disposed at the rear. In some examples, the upper end of the battery pack 21 is inclined forward at an angle greater than or equal to 0° and less than 90°. Corresponding to the battery connection terminals 22, the connection terminals 132 of the tool body 1 are also disposed at the rear of the accommodation portion 131. In this manner, the length of the chainsaw 100 in the front and rear direction can be reduced, and thus the chainsaw 100 is more compact in structure and can be better adapted to battery packs 21 of different models. The overall center of gravity of the chainsaw 100 can be adjusted according to the size of the battery pack 21, achieving a better human-machine function.

As shown in FIGS. 1 and 2, the battery pack 21 has a length direction a, a width direction b, and a height direction c, and it is defined that a dimension of the battery pack 21 in the length direction a is greater than a dimension of the battery pack 21 in the width direction b, and the dimension of the battery pack 21 in the width direction b is greater than a dimension of the battery pack 21 in the height direction c. After the battery pack 21 is mounted to the tool body 1, the angle α between the width direction b of the battery pack 21 and a first plane 104 is greater than or equal to 0° and less than 90°. In some examples, after the battery pack 21 is mounted to the tool body 1, the angle α between the width direction b of the battery pack 21 and the first plane 104 is greater than or equal to 10° and less than or equal to 30°. In some examples, after the battery pack 21 is mounted to the tool body 1, the angle α between the width direction b of the battery pack 21 and the first plane 104 is greater than or equal to 30° and less than or equal to 60°. In some examples, after the battery pack 21 is mounted to the tool body 1, the angle α between the width direction b of the battery pack 21 and the first plane 104 is greater than or equal to 60° and less than 90°. The first plane 104 is perpendicular to a cutting plane, and the cutting plane is a plane formed by the guide plate 11 extending along the front and rear direction, that is, the guide plate plane 111.

The battery pack 21 is obliquely mounted to the tool body so that the length of the chainsaw 100 in the front and rear direction can be reduced, thereby improving the structural compactness of the chainsaw 100. Moreover, the center of gravity of the chainsaw 100 can be adjusted according to the size of the battery pack 21 so that the user holds the chainsaw 100 in conformity with ergonomics.

In some examples, the housing 13 forms a handle 14 extending along the front and rear direction, and the handle 14 forms a grip 141 for the user to hold. The handle 14 is located behind the battery pack 21 in the front and rear direction so that the user holds the handle 14 conveniently and in conformity with ergonomics. As for a position setting of the battery pack 21 and the handle 14, a projection of the grip 141 on a first reference plane 101 is located within a projection of the battery pack 21 on the first reference plane 101, where the first reference plane 101 is perpendicular to the front and rear direction. The battery pack 21 is mounted at such a position that a dimension of the chainsaw 100 in the up and down direction is reduced and the chainsaw 100 is more compact in structure. A projection of the grip 141 on a second reference plane 102 is located outside a projection of the battery pack 21 on the second reference plane 102. The second reference plane 102 is perpendicular to the up and down direction. The mounting position of the battery pack 21 does not affect the position of the grip 141 of the handle 14 and thus does not affect the comfort of the user holding the grip 141.

As shown in FIG. 4, in some examples, the chainsaw 100 further includes a display device 34. The display device 34 is at least partially located above the battery pack 21 in the up and down direction. The display device 34 is mounted onto the housing 13. The display device 34 is configured to display a current state of the chainsaw 100. The display device 34 of the present application can make full use of an upper space of the housing 13 and display multiple current states of the chainsaw 100 without being blocked by the battery pack 21.

In some examples, the display device 34 has a display plane 34a, and the angle β between the display plane 34a and a bottom plane 105 perpendicular to the guide plate plane 11 is greater than or equal to 25° and less than or equal to 75°. In some examples, the angle β between the display plane 34a and the bottom plane 105 perpendicular to the guide plate plane 111 is greater than or equal to 30° and less than or equal to 40°. In some examples, the angle β between the display plane 34a and the bottom plane 105 perpendicular to the guide plate plane 111 is greater than or equal to 40° and less than or equal to 60°. In some examples, the angle β between the display plane 34a and the bottom plane 105 perpendicular to the guide plate plane 111 is greater than or equal to 60° and less than or equal to 75°. In this manner, the display device 34 is inclined so that a space occupied by the display device 34 in the front and rear direction can be reduced. The display plane 34a is disposed at an appropriate inclination angle so that in the case where the user holds the chainsaw 100 for cutting, the user can conveniently and directly observe the content displayed on the display device 34, and the display device 34 is not blocked by a hand of the user. The display device 34 is disposed above the battery pack 21, and a projection of the display device 34 on the bottom plane 105 perpendicular to the guide plate plane is at least partially located within a projection of the battery pack 21 on the bottom plane 105, thereby reducing the dimension of the chainsaw 100 in the front and rear direction and improving the structural compactness of the chainsaw 100.

The display device 34 is disposed in front of the handle 14 in the front and rear direction. In the case where the user holds the handle 14, the display device 34 is disposed face to face with the user, making it convenient for the user to check the display plane 34a of the display device 34. A projection of the display device 34 on the first reference plane 101 perpendicular to the front and rear direction does not overlap a projection of the handle 14 on the first reference plane 101. In the case where the user holds the handle 14, the display device 34 is not blocked, and the user is not hindered from checking the content displayed on the display device 34. The first reference plane 101 is shown in FIG. 1.

The display plane 34a has a display center P, and the distance L3 from the display center P to the bottom plane 105 is greater than or equal to 85 mm and less than or equal to 200 mm. The dimension of the chainsaw 100 in the up and down direction can be reduced without hindering the user from checking the display plane. In some examples, the distance L3 from the display center P of the display plane 34a to the bottom plane 105 is greater than or equal to 90 mm and less than or equal to 100 mm. In some examples, the distance L3 from the display center P of the display plane 34a to the bottom plane 105 is greater than or equal to 105 mm and less than or equal to 120 mm. In some examples, the distance L3 from the display center P of the display plane 34a to the bottom plane 105 is greater than or equal to 125 mm and less than or equal to 140 mm. In some examples, the distance L3 from the display center P of the display plane 34a to the bottom plane 105 is greater than or equal to 145 mm and less than or equal to 160 mm. In some examples, the distance L3 from the display center P of the display plane 34a to the bottom plane 105 is greater than or equal to 165 mm and less than or equal to 180 mm. In some examples, the distance L3 from the display center P of the display plane 34a to the bottom plane 105 is greater than or equal to 185 mm and less than or equal to 200 mm.

In some examples, the display area of the display plane 34a of the display device 34 is greater than or equal to 1000 mm2 and less than or equal to 3000 mm2. The display plane 34a may be a display region exposed to be observable by the user. An appropriate display area is set so that the check of the user is facilitated and more state parameters of the chainsaw 100 are displayed without increasing the dimensions of the chainsaw 100. In some examples, the display area of the display device 34 is greater than or equal to 1200 mm2 and less than or equal to 1500 mm2. In some examples, the display area of the display device 34 is greater than or equal to 1500 mm2 and less than or equal to 1800 mm2. In some examples, the display area of the display device 34 is greater than or equal to 1800 mm2 and less than or equal to 2100 mm2. In some examples, the display area of the display device 34 is greater than or equal to 2100 mm2 and less than or equal to 2400 mm2. In some examples, the display area of the display device 34 is greater than or equal to 2400 mm2 and less than or equal to 3000 mm2.

Examples of the present application provide the chainsaw with the display device, making it convenient for the user to understand multiple current working states of the chainsaw. The display device is inclined so that the space occupied by the display device in the front and rear direction is reduced. The display plane is disposed at an appropriate inclination angle so that in the case where the user holds the chainsaw for cutting, the user can conveniently and directly observe the content displayed on the display device, and the display device is not blocked by the hand of the user. Meanwhile, an appropriate display area is set so that not too much space is occupied, and it is convenient for the user to observe the content displayed on the display device.

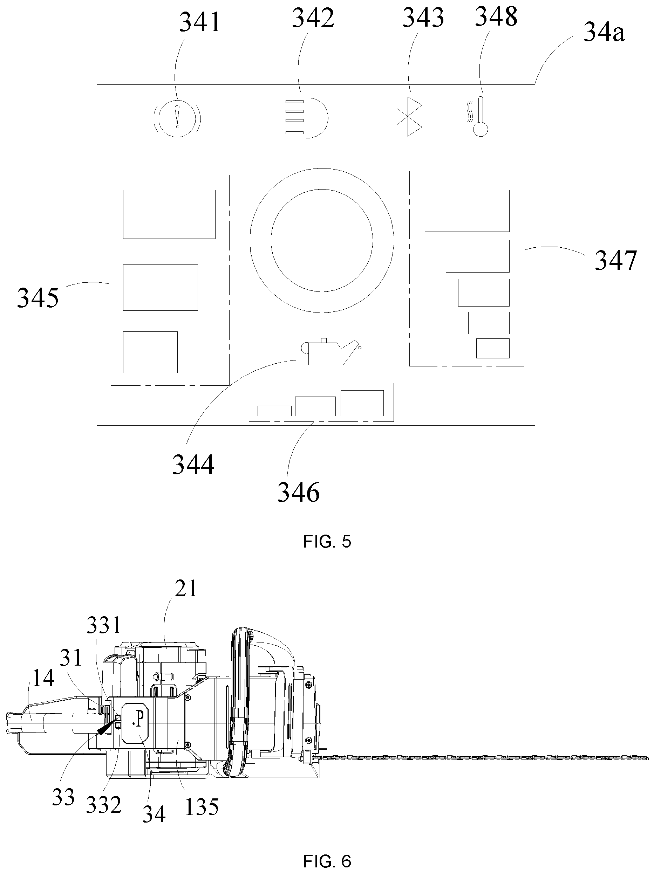

As shown in FIG. 5, a brake state display region 341, a headlight working state display region 342, a Bluetooth connection state display region 343, a low oil volume warning display region 344, a cutting mode display region 345, an oil output display region 346, a cutting load display region 347, and an over-temperature icon display region 348 are provided on the display plane 34a of the display device 34.

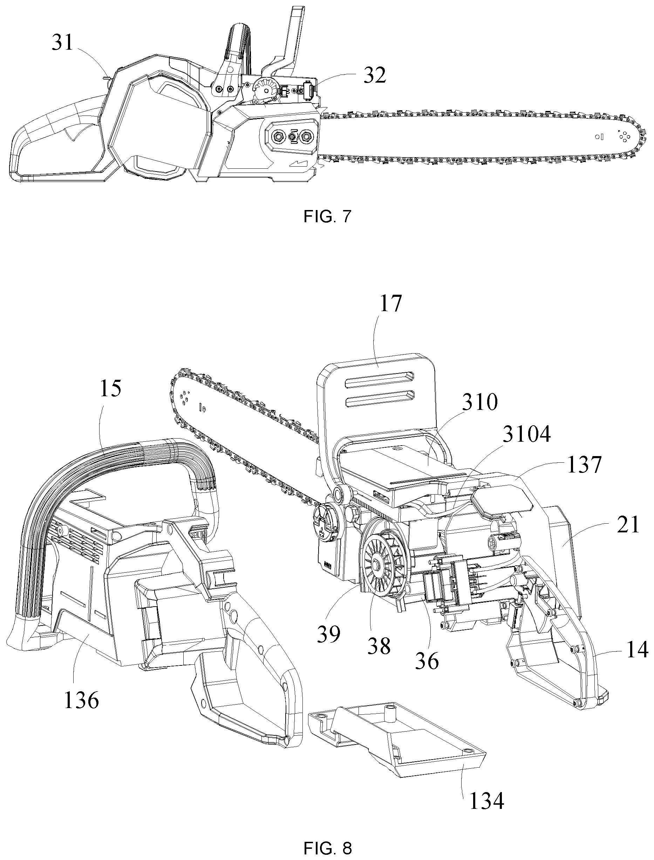

As shown in FIGS. 5, 6, and 7, the cutting mode display region 345 displays three gears. A first gear corresponds to one lighted grid in the display region 345, a second gear corresponds to two lighted grids in the display region 345, and a third gear corresponds to three lighted grids. The chainsaw 100 includes a speed regulator 31 disposed close to the handle 14. The speed regulator 31 is disposed close to the handle 14, making it convenient for the user to operate the speed regulator 31 to adjust at least a cutting mode of the chainsaw 100. In other words, the hand of the user holding the handle 14 can operate the speed regulator 31 to control the cutting mode of the chainsaw 100. During operation, after the chainsaw 100 is started, the first gear is displayed in the cutting mode display region 345. The speed regulator 31 includes a toggle switch. When the toggle switch is toggled once, the cutting mode display region 345 displays switching to the second gear; when the toggle switch is toggled again, the cutting mode display region 345 displays switching to the third gear; and when the toggle switch is toggled again, the cutting mode display region 345 displays switching back to the first gear, and the switching is cycled in this manner.

In some examples, an end of the toggle switch is rotatably disposed on the housing 13, the toggle switch has a toggle plate for the user to operate, the toggle plate is disposed outside the housing 13, the speed regulator 31 further includes an induction magnet disposed on the toggle switch, and a Hall detector is disposed at a position corresponding to the induction magnet in the housing 13. In the case where the toggle switch is toggled, the Hall detector detects a change in a magnetic field of the induction magnet, proving that the toggle switch is toggled, and the cutting mode is switched.

In some examples, when a time from when the toggle switch is toggled last time is greater than a first preset time, the display device 34 is woken up and then the toggle switch is toggled so that the cutting mode is switched. The first preset time may be set according to actual requirements and is not limited here.

In some examples, five grids are provided in the cutting load display region 347, and the number of grids provided may be greater than 5 or less than 5, which is not limited here. The number of grids lighted changes at any time with a magnitude of a current of the motor 36 when the chainsaw 100 performs cutting. In the case where the chainsaw 100 is started, one of the grids disposed in the cutting load display region 347 is lighted.

The chainsaw 100 further includes multiple operating elements 33 for the user to operate, and at least part of the operating elements 33 is disposed close to the display device 34 to be convenient for the user to operate. At least one of the operating elements 33 is operable to adjust an oil output of the chainsaw 100 or a lighting state of the chainsaw 100. A lighting module 32 is provided on the front side of the housing 13. The operating elements 33 include a first operating button 331 and a second operating button 332. The first operating button 331 is configured to control the lighting state of the chainsaw 100, that is, turn on or off the lighting module 32 or adjust the lighting brightness of the lighting module 32. The second operating button 332 is configured to adjust the oil output of the chainsaw 100. In practical operation, when the first operating button 331 is lightly pressed once, a lighting function of the chainsaw 100 is activated, the brightness is maximum, and an icon of the headlight working state display region 342 is lighted. When the first operating button 331 is lightly pressed again, the lighting brightness is switched, and the icon display of the headlight working state display region 342 changes accordingly. When the first operating button 331 is lightly pressed again, the lighting is turned off, and the switching between three gears is cycled in this manner.

In some examples, the chainsaw 100 further has an Internet of things module, and the user can control or understand the state of the tool through the Internet of things module. The first operating button 331 further has a Bluetooth connection function. When the first operating button 331 is pressed long for a second preset time, a Bluetooth pairing function is activated. In a pairing process, a Bluetooth icon in the Bluetooth connection state display region 343 flickers. After successful pairing, the Bluetooth icon is always on. In the case where the Bluetooth function is deactivated, the Bluetooth icon is off. After the Bluetooth icon is always on, an external device can be communicatively connected to the tool body 1 or the battery pack 21 via Bluetooth. In some examples, the user can maintain and upgrade a program of the tool body 1 by operating the external device. In some examples, the external device communicates with the tool body 1 and the battery pack 21 in a bidirectional communication manner. In some examples, related data of the battery pack 21 and the tool body 1, such as related working states and warning information, can be uploaded to the external device via Bluetooth for reference by the user. In some examples, the user can control gears and other working modes of the chainsaw 100 through the external device.

In some examples, the oil output display region 346 has three gear icons. In the case where the chainsaw 100 is started, a chain oil output is in a first gear, and one of the three gear icons in the oil output display region 346 is lighted. When the second operating button 332 is lightly pressed once, the chain oil output is in a second gear, and two of the three gear icons in the oil output display region 346 are lighted. When the second operating button 332 is lightly pressed again, the chain oil output is in a third gear, three icons are lighted, and the switching between three gears is cycled in this manner.

In some examples, when an oil can 311 is empty, an icon of the low oil volume warning display region 344 is lighted, and the oil output display region 346 automatically switches to the first gear.

In some examples, in the case where the chainsaw 100 operates at a large current for a time greater than or equal to a third preset duration, an icon of the over-temperature icon display region 348 flickers and turns always on after an over-temperature. The large current may have a fixed value or a value within a preset current range.

When the chainsaw 100 is in a braking state, an icon of the brake state display region 341 is always on. When a braking function of the chainsaw 100 is not activated, the icon of the brake state display region 341 is off.

As shown in FIG. 4, an operating member 35 for the user to operate is disposed at the front end of the handle 14. The operating member 35 is configured to control the chainsaw 100 to start or stop. The operating member 35 is disposed at a reasonable position that facilitates the operation of the user, improving the comfort of operation of the user.

In some examples, as shown in FIGS. 2, 8, and 9, the housing 13 includes a left housing 136 and a right housing 137, and the left housing 136 and the right housing 137 are fastened to each other to form the accommodation space 13a with a first opening 1341 and a second opening. The first opening 1341 makes the accommodation space 13a opened downward and the second opening makes the accommodation space 13a opened upward. A first cover plate 134 is provided at the first opening 1341, and the first cover plate 134 is detachably connected to the housing 13, that is, the first cover plate 134 is detachably connected to the left housing 136 and the right housing 137. In the case where the first cover plate 134 is detached, the housing 13 has the first opening 1341 that opens downward. In the case where it is necessary to remove wood chips in the housing 13, the first cover plate 134 is detached, and the wood chips fall out from the first opening 1341 under their own gravity, making it more convenient to clean the wood chips in the housing 13 and avoiding a need to disassemble the entire housing 13 to clean the wood chips. The structure is simple and the operation is easy to implement.

In the case where the chainsaw 100 is placed upright on a plane, the first cover plate 134 is in contact with the plane. To improve the wear resistance of the housing, at least part of the first cover plate 134 is made of metal. In the case where the chainsaw 100 is placed on the plane, a portion of the first cover plate 134 in contact with the plane is made of metal so that the wear resistance of the housing can be improved.

In some examples, the first cover plate 134 forms a support portion 1342, the support portion 1342 is configured to be supported on the plane, and the support portion 1342 and the first cover plate 134 are both made of plastic. The support portion 1342 can be supported on the plane without wearing the first cover plate 134, and the support portion 1342 and the first cover plate 134 are made of plastic or metal.

In some examples, the support portion 1342 includes multiple support ribs connected to the first cover plate 134. The support ribs are made of metal. In the case where the chainsaw 100 is placed on the plane, the support ribs are in contact with the plane. The first cover plate 134 is made of plastic, reducing a cost.

The support portion 1342 may be a raised block protruding from the first cover plate 134 or may be multiple support ribs connected to the first cover plate 134, thereby improving the stability of support for the chainsaw 100.

The chainsaw 100 further includes an auxiliary handle 15 for the user to hold, and the auxiliary handle 15 is disposed in front of the handle 14. The auxiliary handle 15 has mounting portions 142 connected to the housing 13, and the mounting portions 142 are not lower than the first cover plate 134 in the up and down direction so that when the first cover plate 134 is supported on the plane, the mounting portions 142 are not worn. The mounting portions 142 improve the structural strength of a connection between the auxiliary handle 15 and the housing 13. The first cover plate 134 covers an outer side of a mounting portion 142 of the auxiliary handle 15 and protects a connection between the mounting portion 142 and the housing 13 from being easily broken. A spirit level is provided on a side of the auxiliary handle 15 facing the handle 14, and the spirit level is separately disposed along a horizontal direction and a vertical direction of the auxiliary handle 15 to serve as reference for horizontality and verticality in a felling process of the user.

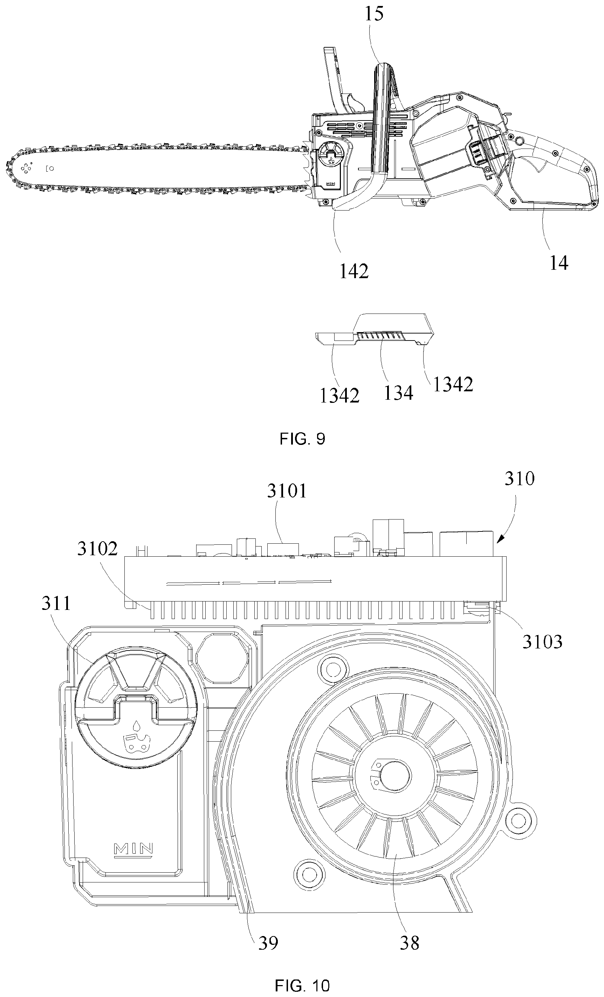

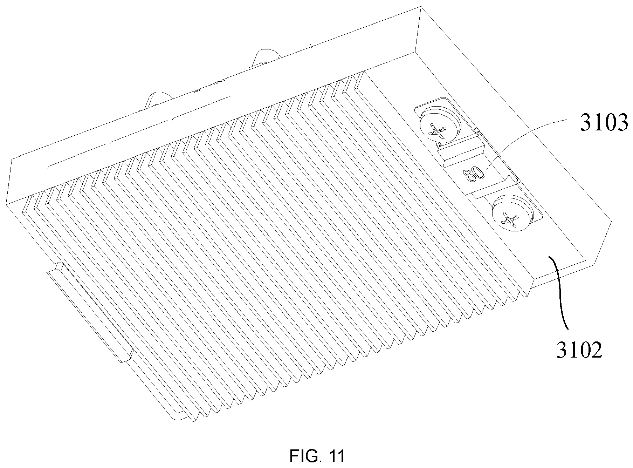

The housing 13 further includes a second cover plate 135, and the second cover plate 135 is detachably connected to the housing 13, that is, the second cover plate 135 is detachably connected to the left housing 136 and the right housing 137. In the case where the second cover plate 135 is detached, the housing 13 forms the second opening of the accommodation space 13a which opens upward. A control box 310 is provided in the accommodation space 13a formed by the left housing 136 and the right housing 137, and the control box 310 is disposed at the second opening. In the case where the control box 310 is repaired, the second cover plate 135 is simply detached, which is convenient to operate. As shown in FIGS. 10 and 11, the control box 310 includes a fuse 3103, and the fuse 3103 is disposed at the second opening to be convenient to replace.

In some examples, the control box 310 further includes a heat dissipation element 3102 and a circuit board assembly 3101. The heat dissipation element 3102 is disposed under the circuit board assembly 3101, and the heat dissipation element 3102 can dissipate heat for a heating element of the circuit board assembly 3101. The fuse 3103 is disposed on the heat dissipation element 3102, and the heat dissipation element 3102 can dissipate heat for the fuse 3103.

In some examples, the fuse 3103 is disposed on the circuit board assembly 3101. In some examples, the fuse 3103 is disposed close to the circuit board assembly 3101. In the present application, the fuse 3103 should be disposed close to the control box 310 so that when heat dissipation is performed on the control box 310, the heat dissipation can be performed on the fuse 3103 at the same time, an additional air outlet is not required to dissipate heat for the fuse 3103, the appearance design of the whole machine is more beautiful, and an internal air path arrangement is simpler.

The battery pack 21 is detachably mounted in the accommodation portion 131 of the housing 13. A power cord 3104 between the connection terminals 132 in the accommodation portion 131 and the control box 310 is disposed above the battery pack 21 for easy wiring. The power cord 3104 can be hidden in the housing 13 and is not damaged by an external environment.

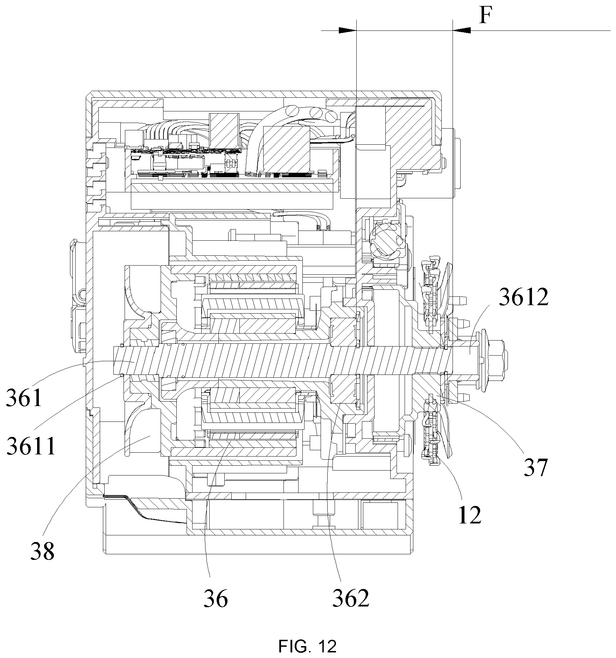

In some examples, as shown in FIG. 12, the motor 36 is disposed in the accommodation space 13a of the housing 13, a drive shaft 361 of the motor 36 penetrates through the housing 13 to drive a transmission mechanism 37, and the transmission mechanism 37 is drivingly connected to the chain 12 to drive the chain 12 to move around the guide plate 11 to implement the cutting function. The control box 310 may be disposed above the motor 36 to improve the structural compactness of the chainsaw 100.

In some examples, the motor 36 includes the drive shaft 361 supported by at least a bearing 362 and configured to drive the chain 12 to rotate. The drive shaft 361 includes a first end 3611 facing a fan 38 and a second end 3612 facing away from the fan 28. The distance F from a right end face of the bearing 362 to the second end 3612 of the drive shaft 361 is less than or equal to 30 mm. In some examples, the distance F from the right end face of the bearing 362 to the second end 3612 of the drive shaft 361 is less than or equal to 25 mm. In the present application, the motor 361 does not need to drive an oil pump so that a cantilever length of the drive shaft 361 of the motor 36 can be reduced, and the service life of the motor 36 can be increased.

In some examples, an output rotational speed of the transmission mechanism 37 is greater than or equal to 8000 rpm and less than or equal to 20000 rpm. In some examples, the output rotational speed of the transmission mechanism 37 is greater than or equal to 8000 rpm and less than or equal to 10000 rpm. In some examples, the output rotational speed of the transmission mechanism 37 is greater than or equal to 10000 rpm and less than or equal to 15000 rpm. In some examples, the output rotational speed of the transmission mechanism 37 is greater than or equal to 15000 rpm and less than or equal to 20000 rpm.

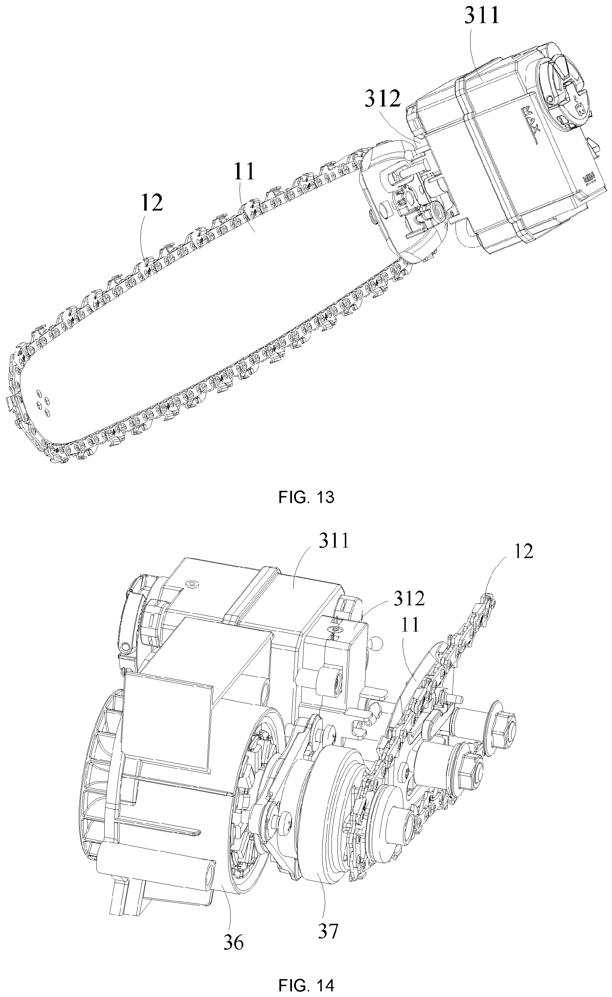

As shown in FIGS. 13 to 15, an oil can 311 is provided in the accommodation space 13a of the housing 13. The oil can 311 is configured to store lubricant. The oil can 311 is disposed below the control box 310 and on the front side of the motor 36. An oil pump 312 for pumping the lubricant to lubricate the chain 12 or the guide plate 11 is disposed on the oil can 311. The oil pump 312 is connected to an oil pump motor 312a. The oil pump 312 can pump the lubricant in the oil can 311 to the guide plate 11 to lubricate the chain 12.

In some examples, as shown in FIGS. 1, 8, and 10, the chainsaw 100 further includes the fan 38 and a wind guide cover 39 disposed on the outer side of the fan 38. The fan 38 is configured to generate a cooling airflow that enters from an air inlet 138 and flows out from an air outlet 139. At least part of a flow path of the cooling airflow is disposed between the oil can 311 and the wind guide cover 39 so that the motor 36 and the control box 310 can be cooled. At least part of the cooling airflow can flow through the fuse 3103 to cool the fuse 3103.

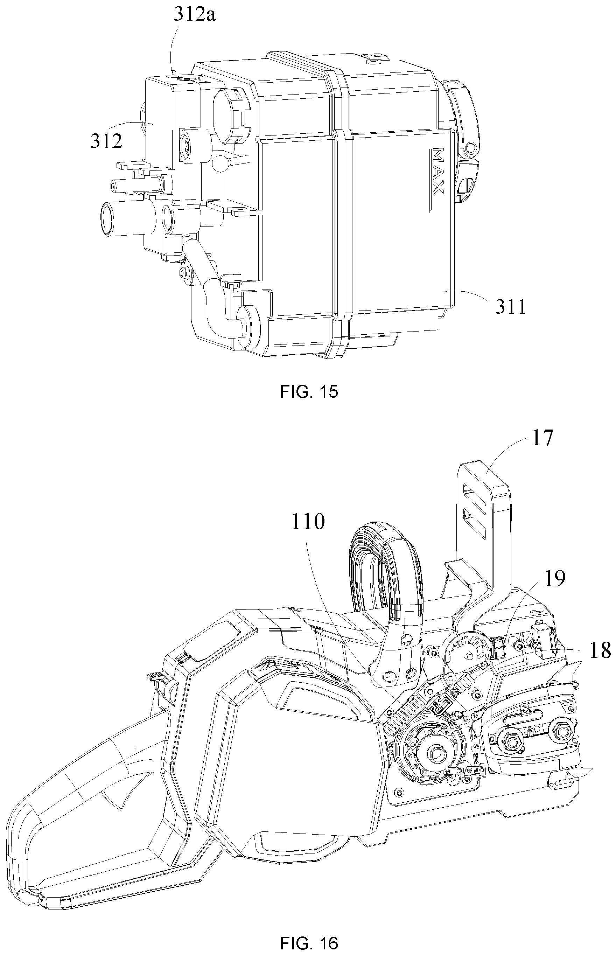

In some examples, as shown in FIG. 16, a brake baffle 17 is connected to the housing 13, and the brake baffle 17 has three legs, which are a first brake leg, a second brake leg, and a third brake leg, respectively. The first brake leg drives a brake switch to cut off a circuit to implement electronic braking; the second brake leg drives a brake band to perform mechanical braking; and the third brake leg is configured for mounting and positioning, that is, the third brake leg is connected to the housing 13. A priority of the electronic braking is greater than that of the mechanical braking, that is to say, the mechanical braking starts only after the brake switch cuts off the circuit. The first brake leg and the second brake leg are disposed on one side of the handle, and the third brake leg is disposed on the other side of the handle 14.

The second brake leg is provided with an induction element such as a magnet, a braking Hall element 19 is provided on a side of the housing 13 corresponding to the induction element, and the braking Hall element 19 corresponds to the induction element. When the braking Hall element 19 detects a change in the magnetic field, a brake signal is given to control the circuit board assembly to cut off the circuit.

In some examples, a first reset spring 18 and a second reset spring 110 are connected between the brake baffle 17 and the housing 13. Both the first reset spring 18 and the second reset spring 110 can reset the brake baffle 17. In the case where one of the first reset spring 18 and the second reset spring 110 fails, the other can still reset the brake baffle 17, thereby avoiding a functional failure of the brake baffle 17.

In some examples, as shown in FIG. 1, a felling guide line 16 is further provided on an outer surface of the housing 13. The felling guide line 16 has a light display effect or a fluorescent display to serve as a guide for the user in the felling process.

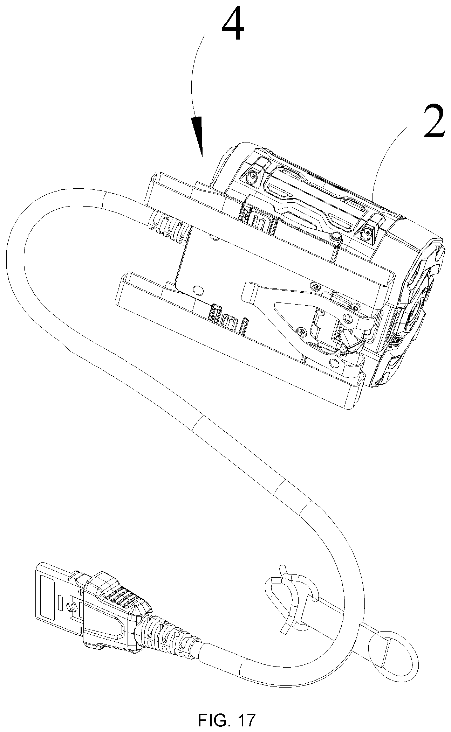

In some other examples, as shown in FIG. 17, the chainsaw 100 further includes a wearable device 4, and the power supply device 2 is not mounted on the tool body 1 to reduce the weight of the chainsaw 100, making it convenient for the user to hold the chainsaw 100 and reducing the fatigue of the user during use. The power supply device 2 is mounted on the wearable device 4, the wearable device 4 is electrically connected to the motor 36, and the user may carry the wearable device 4 on a body of the user.

The wearable device 4 is provided with a mounting position, connection terminals are provided at the mounting position, and the battery 21 is mounted at the mounting position and the battery connection terminals 22 are connected to the connection terminals. The wearable device 4 is connected to a cord, one end of the cord is conductively connected to the connection terminals on the wearable device 4, and a plug connector is provided at the other end of the cord, where the plug connector is pluggably connected to a connector on the tool body 1.

In some examples, maximum output power of the chainsaw 100 is greater than or equal to 2500 W and less than or equal to 5000 W; and an effective cutting length of the chainsaw 100 is greater than or equal to 14 inches and less than or equal to 32 inches, that is, the effective cutting length of the chainsaw 100 is basically greater than or equal to 36 cm and less than or equal to 82 cm. The output power of the chainsaw 100 is increased and thus the effective cutting length of the chainsaw 100 can be increased, thereby improving the cutting efficiency and user satisfaction of the chainsaw 100. The maximum output power of the chainsaw 100 is greater than or equal to 3000 W and less than or equal to 4000 W; and the effective cutting length of the chainsaw 100 is greater than or equal to 14 inches and less than or equal to 24 inches, that is, the effective cutting length of the chainsaw 100 is basically greater than or equal to 35 cm and less than or equal to 61 cm. The output power of the chainsaw 100 is increased and thus the effective cutting length of the chainsaw 100 can be increased. The effective cutting length may be understood as the distance from the most front end of the housing 13 to the most front end of the chain.

**In** some examples, a rated chain speed of the chainsaw 100 is greater than or equal to 30 m/s and less than or equal to 40 m/s, thereby improving the cutting efficiency of the chainsaw 100. In some examples, the rated chain speed of the chainsaw 100 is greater than or equal to 35 m/s and less than or equal to 40 m/s. In some examples, total energy of the power supply device 2 is greater than or equal to 20 Wh; and a nominal voltage of the power supply device 2 is greater than or equal to 40 V and less than or equal to 100 V. In some examples, the total energy of the power supply device 2 is greater than or equal to 26 Wh.

In some other examples, the auxiliary handle 15 is disposed on the housing 13, the battery pack 21 is mounted on the tool body 1, and the ratio of the distance L1 between the center of gravity of the battery pack 21 and the auxiliary handle 15 to the distance L2 between the auxiliary handle 15 and the front end of the guide plate 11 is greater than or equal to 0.1 and less than or equal to 0.3, so as to achieve the overall balance of the chainsaw 100 and reduce a change in the center of gravity when a different battery pack 21 is used instead. **In** some examples, the ratio of the distance L1 between the center of gravity of the battery pack 21 and the auxiliary handle 15 to the distance L2 between the auxiliary handle 15 and the front end of the guide plate 11 is equal to 0.2.

**In** some examples, the motor 36 is configured to be a sensorless brushless motor, which means that the motor 36 helps a controller to control the commutation of the brushless motor by using neither a rotor induction magnet nor a rotor position sensor. In the present application, the operation of the brushless motor is controlled by a vector control method. When the brushless motor is stationary, the corresponding phase current information is obtained by a high-frequency signal injection method, initial position information of a rotor is decoupled from phase currents, and the brushless motor is driven according to position information of the rotor. Thus, in one aspect, no position sensor is required so that the cost can be reduced, and the brushless motor and the chainsaw 100 can be more compact in structure. In another aspect, the operation of the brushless motor can be more accurately controlled by the vector control method, thereby improving the overall performance of the chainsaw 100.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A chainsaw, comprising:
a housing formed with or connected to at least a handle for a user to hold;
a guide plate configured to support and guide a chain, wherein an end of the guide plate is supported by the housing;
a power supply device comprising at least one battery pack detachably connected to the housing to provide electrical energy for the chainsaw; and
a display device mounted to the housing and configured to display a current state of the chainsaw;
wherein the display device has a display plane, and an angle β between the display plane and a bottom plane perpendicular to a guide plate plane is greater than or equal to 25° and less than or equal to 75°.

2. The chainsaw according to claim 1, wherein the angle β between the display plane and the bottom plane perpendicular to the guide plate plane is greater than or equal to 40° and less than or equal to 60°.

3. The chainsaw according to claim 1, wherein a distance L3 from a display center P of the display plane to the bottom plane is greater than or equal to 85 mm and less than or equal to 200 mm.

4. The chainsaw according to claim 1, wherein a display area of the display plane is greater than or equal to 1000 mm² and less than or equal to 3000 mm².

5. The chainsaw according to claim 1, wherein the display device is at least partially disposed above the power supply device in an up and down direction.

6. The chainsaw according to claim 5, wherein a projection of the display device on the bottom plane perpendicular to the guide plate plane is at least partially located within a projection of the power supply device on the bottom plane.

7. The chainsaw according to claim 1, wherein the display device is at least partially disposed in front of the handle in a front and rear direction.

8. The chainsaw according to claim 7, wherein a projection of the display device on a first reference plane perpendicular to the front and rear direction does not overlap a projection of the handle on the first reference plane.

9. The chainsaw according to claim 1, wherein the display plane has at least one of a brake state display region, a headlight working state display region, a Bluetooth connection state display region, a low oil volume warning display region, a cutting mode display region, an oil output display region, a cutting load display region, or an over-temperature icon display region.

10. The chainsaw according to claim 1, further comprising a plurality of operating elements for the user to operate, wherein at least part of the plurality of operating elements is disposed close to the display device.

11. The chainsaw according to claim 10, wherein at least one of the plurality of operating elements is operable to adjust an oil output of the chainsaw or a lighting state of the chainsaw.

12. The chainsaw according to claim 1, further comprising a speed regulator disposed close to the handle, wherein the speed regulator is disposed within a reachable range of a hand on the handle.

13. The chainsaw according to claim 1, wherein maximum output power of the chainsaw is greater than or equal to 2500 W and less than or equal to 5000 W; and an effective cutting length of the chainsaw is greater than or equal to 14 inches and less than or equal to 32 inches.

14. The chainsaw according to claim 1, wherein the housing encloses an accommodation space for accommodating a motor; the housing comprises a first cover platethat is detachable; and in a case where the first cover plate is detached, the housing forms a first opening through which the accommodation space is opened downward.

15. The chainsaw according to claim 1, wherein the housing forms an accommodation portion for accommodating the power supply device; the accommodation portion forms a groove; the groove has an opening that opens downward; and the groove obliquely extends from a groove bottom rearward and downward to the opening.

16. A chainsaw, comprising:
a housing formed with or connected to a handle for a user to hold;
a guide plate configured to support and guide a chain, wherein an end of the guide plate is supported by the housing;
a power supply device detachably connected to the housing to provide electrical energy for the chainsaw; and
a display device comprising at least one battery pack detachably connected to the housing to provide electrical energy for the chainsa, wherein the display device has a display plane, and a display area of the display plane is greater than or equal to 1000 mm² and less than or equal to 3000 mm².

17. The chainsaw according to claim 16, wherein the display area of the display plane is greater than or equal to 1000 mm² and less than or equal to 3000 mm².

18. The chainsaw according to claim 16, wherein the display device is disposed above the power supply device, and a projection of the display device on a bottom plane perpendicular to a guide plate plane is at least partially located within a projection of the power supply device on the bottom plane.

19. The chainsaw according to claim 16, wherein the display device is disposed in front of the handle, and a projection of the display device on a first reference plane perpendicular to a front and rear direction does not overlap a projection of the handle on the first reference plane.

20. The chainsaw according to claim 16, wherein the display device is provided with a brake state display region, a headlight working state display region, a Bluetooth connection state display region, a low oil volume warning display region, a cutting mode display region, an oil output display region, a cutting load display region, and an over-temperature icon display region.
